Europäisches Patentamt

European Patent Office

Office européen des brevets

(19)

(11) Publication number: **0 112 697**
A2

# EUROPEAN PATENT APPLICATION

(12)

(21) Application number: 83307663.1

(22) Date of filing: **16.12.83**

(51) Int. Cl.³: **H 04 M 11/06,** H 04 L 1/00, H 04 L 5/00

(30) Priority: **21.12.82 GB 8236293**

(43) Date of publication of application: **04.07.84** Bulletin 84/27

(84) Designated Contracting States: **DE FR GB NL**

(71) Applicant: **PLESSEY OVERSEAS LIMITED, Vicarage Lane, Ilford Essex IGl 4AQ (GB)**

(72) Inventor: **Gannaway, Julian Nolan, 31 Highview, Pinner Middlesex HA5 3PE (GB)**

(74) Representative: **Fish, Norman Ernest, The Plessey Company plc Intellectual Property Department Vicarage Lane, Ilford Essex IG1 4AQ (GB)**

(54) **Priority coding system.**

(57) A communication system including a transceiver for transmitting and receiving a signal comprising a plurality of channels one of which consists of analogue speech signals and at least one other of which consists of data signals transmitted at intervals and interleaved with the speech signals, the data signals each comprising at least one complete cycle of a frequency or frequencies, which lie within the audio frequency spectrum wherein the significance of the data i.e. '0' or '1', is defined in dependence upon its phase or frequency and wherein the data signal transmission rate is determined in dependence upon error rate detected in relation to the data signals received at a remotely located transceiver.

0112697

## PRIORITY CODING SYSTEM

This invention relates to communication systems and more especially it relates to systems comprising a plurality of channels wherein one channel is assigned for carrying priority data and is arranged to have or to be adapted to have better noise immunity than other channels.

One such system is described in our co-pending U.K. patent application No. 8236785 which relates to a digital system. The present invention however is concerned with a system having at least one analogue speech channel.

According to the present invention a communication system includes a transceiver for transmitting and receiving a signal comprising a plurality of channels one of which consists of analogue speech signals and at least one other of which consists of data signals transmitted at intervals and interleaved with the speech signals, the data signals each comprising at least one complete cycle of a frequency or frequencies, which lie within the audio frequency spectrum wherein the significance of the data i.e. '0' or '1', is defined in dependence upon its phase or frequency and wherein the data signal transmission rate is determined in dependence upon error rate detected in relation to the data signals received at a remotely located transceiver.

The transceiver may comprise a transmitter fed via a first switch either with speech signals from a speech transmission channel unit or with data signals from a data transmission channel unit in dependence upon the operative state of the first switch, and a receiver comprising a second switch which is operatively associated with a sync control circuit responsive to signals received from a remote transceiver for synchronising operation of the said second switch so that data signals are fed thereby to a data reception channel unit and speech signals are fed thereby to a speech reception channel unit, the data reception channel unit being operatively associated with data error rate detector means for producing a local error rate signal indicative of the error rate appertaining to locally received data, which local error rate signal is fed to the data transmission channel unit for inclusion with the data signal for transmission, and a data transmission rate controller responsive to a received error rate signal indicative of the received error rate sensed at the remote transceiver for controlling the rate of data transmitted in dependence upon the received error rate signal.

The data transmitted may be controlled so that as the error rate increases, more bits are used to define each data word whereby the data word transmission rate is decreased.

The data signals may be transmitted by a frequency shift keying technique whereby the significance of a data signal ie '0' or '1' is indicated in accordance with its frequency.

Two frequencies within the audio frequency spectrum may be chosen to define the data signals one of which is twice the frequency of the other.

In an alternative embodiment of the invention, the frequency which defines each data bit may comprise a frequency f between 1 and 4 kHz such as 2.6 kHz for example wherein '0' and '1' data bits are distinguished by a 180° phase shift therebetween.

The intervals at which the cycles of the frequency f are transmitted may be a multiple of $\frac{1}{f}$ seconds and may be irregular and determined in accordance with a psuedo random code. Alternatively however the intervals may be regular.

Thus each complete cycle of f representing a data bit may be followed by a period $\frac{n}{f}$ of analogue speech or a mean period of $\frac{n}{f}$ in the case of a psuedo random coded system, n being chosen so that the period, or the mean period $\frac{n}{f}$ is large enough compared with the period $\frac{1}{f}$ occupied by each data bit to facilitate the transmission of analogue speech interleaved with the data bits so that the speech has acceptably low distortion.

It is contemplated that n might be chosen to be at least 6. Thus the system is arranged to be fully automatic whereby the number of consecutive complete cycles transmitted or their mean period is set automatically in dependence upon a signal received from the remote transceiver indicative of the said error rate detected.

The data may be derived from a light pen comprising means for scanning a bar coded pattern to provide a corresponding digital signal.

One embodiment of the invention will now be described solely by way of example with reference to the accompanying drawings in which:

Figure 1 is a somewhat schematic waveform diagram showing data bits interleaved with speech; and,

Figure 2 is a block schematic diagram of a transceiver.

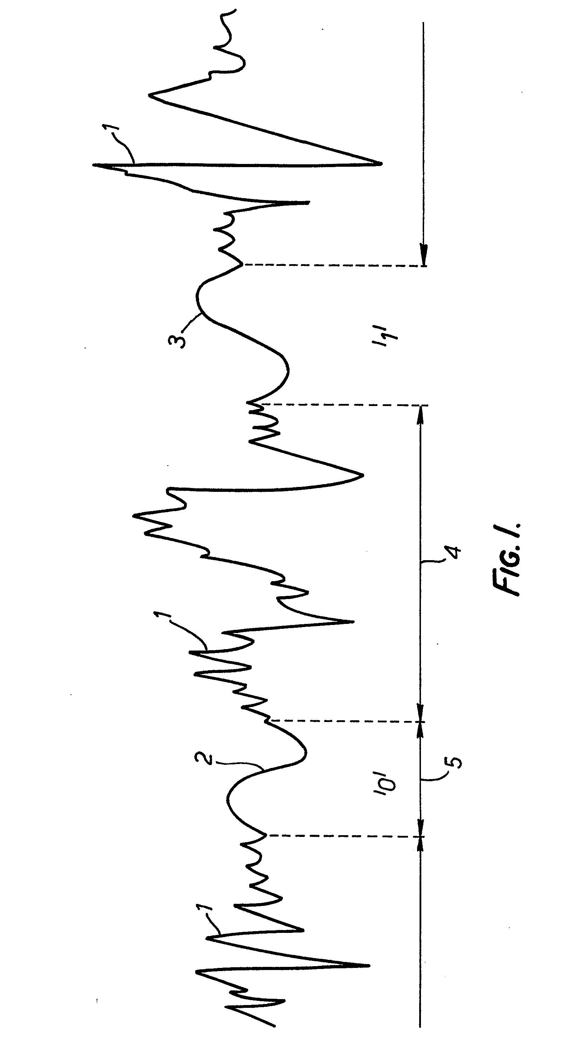

Referring now to Figure 1 of the drawing, a communication system comprises a transmitter adapted for the transmission of a signal comprising a period of analogue speech 1 interleaved with data bits 2 and 3. It is arranged that periods of · analogue speech such as the period represented by the line 4 are multiples of the periods occupied by each data bit. Thus the period occupied by the data bit 2 and represented by a line 5 will be a sub-multiple of the period occupied by analogue speech and represented by the line 4. In one embodiment of the invention the data bits 2 and 3 are each complete cycles of the frequency 2.6 kHz. The data significance of each cycle is determined in dependence upon phase and it will be seen from the drawing that the data bit 2, which is '0', is 180° out of phase with the data bit 3 which in this case is '1'. Alternatively frequency shift keyed data may be transmitted such the data significance '0' or '1' is indicated in accordance with the frequency of each data bit. The length of the period 4 may be fixed or determined in accordance with a psuedo random code but the mean ratio between the periods 4 and 5 will be chosen so that the analogue speech will be substantially unaffected by the interleaved data. It is contemplated that the ratio or the mean ratio between the periods 4 and 5 may be 7-1.

Although one consecutive cycle only is shown devoted to data in the drawing, in conditions of worsening noise or interference as indicated by an error rate detector responsive to the data received at a remotely located transceiver, more complete cycles of the 2.6 kHz signal will be devoted to data and in the limit the whole of the signal may be devoted to the transmission of data. Thus it will be appreciated that under good signal transmission a plurality of different digital channels may be transmitted together with analogue speech, transmission of low priority channels being discontinued in the presence of interference as indicated by the remotely located error rate detector, whereby priority transmissions can be maintained.

Alternatively in order to improve noise immunity, data transmission rates may be reduced when detected error rates rise at the remote transceiver, by increasing the number of data bits which are devoted to each transmitted character as detected error rates rise. Thus under conditions of low interference 8 data bits per character may be transmitted whereas under high noise conditions 512 data bits per character say may be transmitted.

Although the data transmitted may be derived from any source it is specially contemplated that the transmitted data may be derived from a light pen used to scan bar coded charts to produce corresponding digital signals.

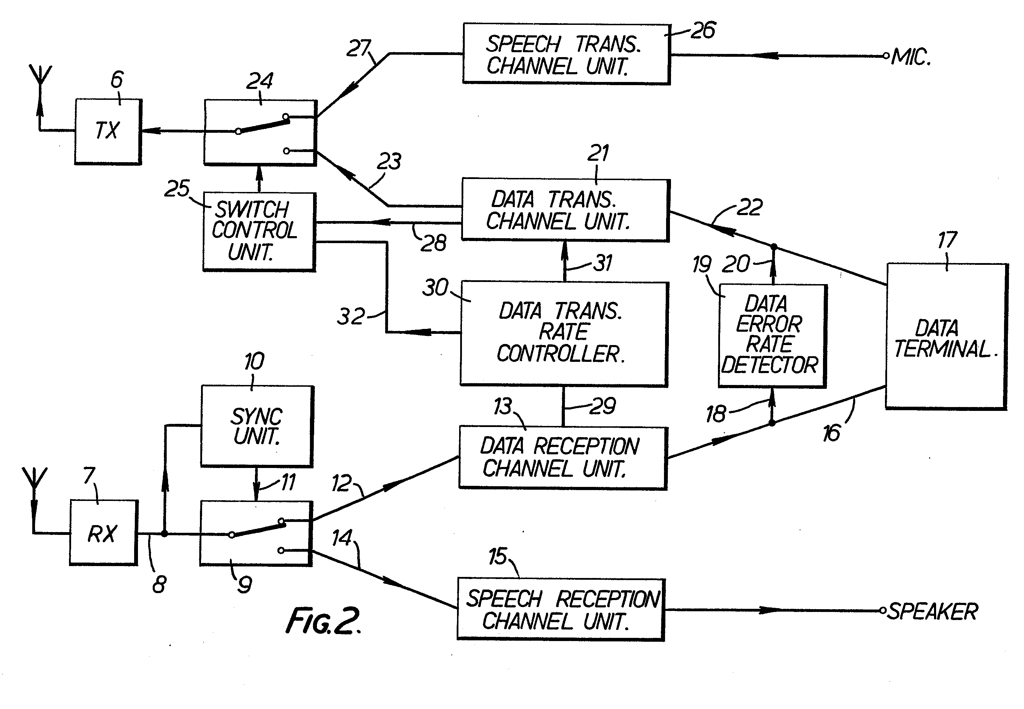

A communication system including means for receiving and transmitting signals as just before described with reference to Figure 1 may comprise a transceiver as shown in Figure 2 including a transmitter 6 for the transmission of signals to a remotely located similar transceiver and a receiver 7 for the reception of signals transmitted from the remotely located transceiver. Signals received by the receiver 7 are fed via a line 8 to a switch unit 9 which is controlled by a synchronisation unit 10. The synchronisation unit 10 is arranged to be responsive to received signals and to be operative to provide control signals on a line 11 which serve to sychronise operation of the switch 9 so that when data signals are received they are fed via a data line 12 to a data reception channel 13 and when speech signals are received they are fed via a line 14 to a speech reception channel unit 15 which is arranged to feed a speaker (not shown). Data signals in the reception channel 13 are fed via a line 16 to a data terminal 17 and via a line 18 to a data error rate detector 19 which serves to compute the received error rate and to generate a signal indicative of the received error rate which is fed via a line 20 to a data transmission channel unit 21. The data transmission channel unit 21 is fed also with data from the data terminal 17 via a line 22 and data for transmission is fed from the data transmission channel unit 21 via a line 23 to a switch unit 24. The switch unit 24 is operated under the control of a switch control unit 25 so as alternately to provide for the transmitter 6, either data from the data channel unit 21 or speech from a speech transmission channel unit 26 fed from a microphone (not shown) which is coupled to the switch unit 24 via a line 27. The switch control unit 25 is arranged to receive timing information via a line 28 from the data transmission channel unit 21 so that switch operation is synchronised with the provision of data via the line 23. In practice the switch unit 24 may be arranged to have a 7 to 1 duty cycle whereby speech information is fed to the transmitter 6 for 7/8 of the available time whereas data is fed to the transmitter 6 for 1/8 of the available time.

Data received by the data reception channel 13 includes data which appertains to the error rate at the remotely located transceiver. This data appertaining to error rate is fed via a line 29 to an error rate controller unit 30 which serves to extract from the received signal, a signal appertaining to error rate at the remotely located transceiver and to generate a control signal which is applied via a line 31 to control the data transmission channel unit 21 accordingly. The control signal fed via the line 31 to the unit 21 controls the data transmission rate so that when the error signal from the remotely located transceiver indicates that reception is poor due to interference for example, data transmission rates are reduced and conversely when conditions of low interference and good signal transmission obtain data transmission rates are arranged to be increased. In addition to or as an alternative to control of the data transmission rate by signals on the line 31, control may be effected via a line 32 of the switch control unit 25 whereby the effective duty cycle of operation may be changed. Thus under certain conditions it may be arranged to operate the switch unit 24 such that more or less of the available time is used for the transmission of data. Thus for example under predetermined signal transmission conditions of increased noise, it may be arranged that the switch unit 24 is controlled by the switch control unit 25 so that 2/8 of the duty cycle is devoted to data and 6/8 of the duty cycle are devoted to speech.

The various blocks herein before referred to which in combination define the system comprise circuits which are well understood by those skilled in the art and which may be readily provided to perform the functions specified.

Moreover since the precise designs of the individual parts of the system is not central to the present invention further description is believed to be unnecessary.

CLAIMS

1.    A communication system including a transceiver for transmitting and receiving a signal comprising a plurality of channels one of which consists of analogue speech signals and at least one other of which consists of data signals transmitted at intervals and interleaved with the speech signals, the data signals each comprising at least one complete cycle of a frequency or frequencies, which lie within the audio frequency spectrum wherein the significance of the data i.e. '0' or '1', is defined in dependence upon its phase or frequency and wherein the data signal transmission rate is determined in dependence upon error rate detected in relation to the data signals received at a remotely located transceiver

2.    A communication system as claimed in claim 1 wherein the transceiver comprises a transmitter fed via a first switch either with speech signals from a speech transmission channel unit or with data signals from a data transmission channel unit in dependence upon the operative state of the first switch and a receiver comprising a second switch which is operatively associated with a sync control unit responsive to signals received from a remote transceiver for synchronising operation of the second switch so that data signals are fed thereby to a data reception channel unit and speech signals are fed thereby to a speech reception channel unit, the data reception channel unit being operatively associated with a
data error rate detector means for producing a local error
rate signal indicative of the error rate appertaining to
locally received data, which local error rate signal is fed to
the data transmission channel unit for inclusion with the data
signal for transmission and a data transmission rate
controller responsive to a received error rate signal
indicative of the received error rate sensed at the remote
transceiver for controlling the rate of data transmitted in
dependence upon the received error rate signal.

3.   A communication system as claimed in claim 1 or claim 2
wherein as the detected error rate increases more data bits
are used to define each data word whereby the data word
transmission rate is decreased.

4.   A communication system as claimed in any preceding claim
wherein a frequency shift keying technique is utilised to
define the significance of a data signal, i.e. the data
significance '0' or '1' is indicated in accordance with the
frequency of transmission.

5.   A communication system as claimed in any of claims 1 to
3 wherein data signals are transmitted utilising a phase shift
keying technique wherein the significance of data i.e. '0' or
'1' is indicated in accordance with the phase of the
transmitted signal.

6.    A communication system as claimed in any preceding claim wherein data is derived from a light pen comprising means for scanning a bar coded pattern to provide a corresponding data digital signal.

Fig. 1.

1/2

FIG.2.